# FASCICULE DE BREVET EUROPEEN

(11) **EP 1 566 299 B1**
(45) Date de publication et mention de la délivrance du brevet: **16.04.2008**
(21) Numéro de dépôt: 05101268.0
(22) Date de dépôt: 18.02.2005
(51) Int. Cl.: B60J 1/20, B60J 3/04, B60J 7/00

(54) **Dispositif d'occultation variable pour véhicule automobile, et véhicule correspondant**
Veränderbare Verdunkelungsvorrichtung für ein Motorfahrzeug, und korrespondierendes Fahrzeug
Variable occultation device for motor vehicle, and corresponding vehicle

(30) Priorité: 18.02.2004 FR 0401649
(43) Date de publication de la demande: 24.08.2005
(73) Titulaire: WAGON SAS, 79302 Bressuire Cédex (FR)
(72) Inventeur: Jolivet, David, 79300 Bressuire (FR)
(74) Mandataire: Bioret, Ludovic

(56) Documents cités:
- DE-A- 4 320 947
- DE-A- 4 426 787
- DE-A- 10 019 644
- FR-A- 2 723 612
- US-A- 5 884 731
- US-A- 6 123 138

## Description

Le domaine de l'invention est celui des véhicules automobiles, et notamment des véhicules présentant une surface vitrée importante, par exemple au niveau du pavillon. Plus précisément, l'invention concerne l'occultation de telles surfaces vitrées, notamment pour se protéger des rayons du soleil.

La tendance actuelle, en matière de véhicule automobile, est de proposer de plus en plus de surfaces vitrées. Ainsi, notamment, on a proposé des véhicules présentant un pavillon équipé d'un ou plusieurs éléments vitrés. Dans certains cas, l'intégralité du pavillon est en verre ou en un matériau similaire laissant passer les rayons du soleil.

Des surfaces vitrées multiples ont également été proposées, par exemple sous la forme de deux ou trois éléments, dont certains peuvent former toits ouvrants. De la même façon, des surfaces vitrées importantes peuvent être prévues sur d'autres parties du véhicule, et par exemple à l'arrière, notamment lorsque le véhicule est équipé d'un hayon.

Ces surfaces vitrées donnent une impression de volume et de confort aux occupants du véhicule et permettent que l'intérieur de l'habitacle soit plus lumineux.

Il est cependant nécessaire de prévoir des moyens d'occultation de ces surfaces vitrées, pour protéger l'habitacle et ses occupants du soleil. Lorsque le pavillon est équipé d'un toit ouvrant, on a pensé à l'équiper d'un volet rigide, pouvant coulisser dans le pavillon. Cette solution pourrait éventuellement être étendue au cas où plusieurs zones vitrées existent, sous réserve qu'il reste suffisamment d'espace dans le pavillon pour dissimuler les volets lorsque ceux-ci ne sont pas utilisés pour occulter la surface vitrée correspondante. Clairement, en revanche, une telle solution ne peut pas être envisagée lorsque le pavillon est intégralement, ou essentiellement, vitré.

Pour les surfaces vitrées réduites, et verticales ou sensiblement verticales, telles que les vitres arrières ou latérales du véhicule, on connaît également les stores à enrouleur, que l'on peut déployer pour se protéger du soleil.

Un des inconvénients de ces techniques réside dans le fait qu'elles conduisent généralement à une occultation relativement forte des différentes surfaces vitrées, qu'il s'agisse des stores destinés à occulter des vitres latérales ou arrières, ou des pavillons.

Un autre inconvénient de ces techniques connues de l'art antérieur est qu'elles ne permettent pas, avec un même store, de moduler le degré d'occultation en fonction de la luminosité souhaitée dans l'habitacle. L'utilisateur n'a ainsi que le choix du « tout ou rien ». Il peut notamment être souhaitable, lorsque le soleil tape, de se protéger de la chaleur et de l'éblouissement dû aux rayons du soleil, sans pour autant réduire de façon trop importante la luminosité dans le véhicule.

DE 4 426 787 A divulgue un dispositif selon le préambule de la revendication 1. FR 2723612 A divulgue un dispositif d'occultation comprenant deux couches et des moyens de décalage pour obtenir un état d'occultation forte et intermédiaire, cependant ce dispositif ne peut être replié.

L'invention a notamment pour objectif de pallier ces différents inconvénients de l'état de l'art.

Plus précisément, l'invention a pour objectif de fournir un dispositif d'occultation pour véhicule automobile, et notamment pour le pavillon de ce dernier, dont le degré d'occultation lorsque celui-ci est déployée puisse être plus faible que celui généralement obtenu à partir des dispositifs connus.

Un autre objectif de l'invention est de fournir un dispositif d'occultation dont le degré d'occultation puisse être modulé en fonction de la luminosité, et éventuellement de la chaleur, souhaitée dans l'habitacle.

Encore un autre objectif de l'invention est de proposer un tel dispositif d'occultation, notamment pour un pavillon, qui ne soit pas plus encombrant que les dispositifs existants.

Un autre objectif de l'invention est de proposer un dispositif d'occultation pour un pavillon dont le procédé de fabrication soit simple et peu coûteux à mettre en oeuvre.

Un autre objectif de l'invention est de fournir un tel dispositif d'occultation qui soit modulable et efficace, et qui présente un aspect visuel de bonne qualité, lorsqu'il est déployé.

L'invention a également pour objectif de fournir un tel dispositif qui permette un déploiement sur une grande surface sensiblement horizontale telle qu'un pavillon.

Ces objectifs, ainsi que d'autres qui apparaîtront par la suite, sont atteints à l'aide d'un dispositif d'occultation pour une surface vitrée d'un véhicule automobile, pouvant prendre au moins deux positions, une position repliée et une position déployée.

Selon l'invention, un tel dispositif d'occultation comprend au moins deux couches superposées sur au moins une partie de leur surface respective dans la position déployée.

Selon l'invention, un tel dispositif comprend en outre des moyens de décalage de la position d'une première couche par rapport à au moins une deuxième couche, de façon à pouvoir prendre au moins un état d'occultation forte et au moins un état d'occultation intermédiaire de la surface vitrée.

Ainsi, l'invention repose sur une approche tout à fait nouvelle et inventive consistant à réaliser un dispositif d'occultation permettant une occultation variable, c'est à dire plus ou moins forte, d'une surface vitrée.

L'invention permet ainsi d'obtenir une solution particulièrement adaptée à la réalisation d'un dispositif pour l'occultation de surfaces de grandes dimensions d'un véhicule automobile. Il peut notamment s'agir d'un pavillon intégralement ou en grande partie vitré, de la vitre arrière ou des vitres latérales du véhicule.

Selon un premier mode de réalisation avantageux de l'invention, deux des couches superposées sont reliées par des lames d'occultation de largeur uniforme prédéterminée et s'étendant perpendiculairement à l'axe de déploiement du dispositif.

Avantageusement, les lames d'occultation et les couches qu'elles relient forment un ensemble pouvant être réalisé en toile synthétique à trois dimensions.

L'ensemble est alors préférentiellement réalisé par extrusion et permet ainsi une simplification et un faible coût, non seulement du procédé de fabrication, mais également du montage et du réglage du dispositif.

De façon avantageuse, dans l'état d'occultation intermédiaire, les lames d'occultation sont comprises dans des plans perpendiculaires aux couches superposées, de façon à laisser passer la lumière dans l'habitacle du véhicule, et dans l'état d'occultation forte, les lames sont comprises dans un plan sensiblement parallèle aux couches, de façon à occulter la lumière.

De façon préférée, l'espacement entre chacune des lames d'occultation et leur largeur uniforme prédéterminée seront tels que dans l'état d'occultation forte, c'est-à-dire lorsque les lames sont dans un même plan parallèle aux couches, les lames soient voisines les unes des autres ou se recouvrent au moins légèrement.

On notera que l'expression « voisines » signifie que les bords latéraux de deux lames consécutives se touchent ou sont très peu éloignés de façon que la surface vitré soit convenablement occultée.

Selon un second mode de réalisation avantageux de l'invention, au moins deux des couches du dispositif présentent chacune au moins deux zones d'opacités différentes.

De façon préférée, les différentes zones sont composées de premières zones de premier degré d'opacité et de secondes zones de second degré d'opacité, supérieur au premier degré d'opacité, et les premières et secondes zones s'alternent de façon régulière.

De façon avantageuse, les zones de premier degré d'opacité d'une couche peuvent se superposer avec les zones de second degré d'opacité d'une autre couche dans l'état d'occultation forte, et dans l'état d'occultation intermédiaire, les zones de premier degré d'opacité des différentes couches se superposent, de façon à laisser passer la lumière dans l'habitacle du véhicule.

Préférentiellement, les zones s'étendent perpendiculairement à l'axe de déploiement du dispositif.

De façon avantageuse, les secondes zones sont formées par des baleines. Celles-ci permettent ainsi l'occultation de la surface vitrée dans l'état d'occultation forte, mais également le maintien des différentes couches dans une forme prédéterminée lorsque le dispositif d'occultation est partiellement ou totalement déployé.

De façon préférée, les premières et secondes zones des différentes zones présentent une même largeur unique, de façon que dans les états d'occultation forte et intermédiaire du dispositif, les différentes zones d'une couche puissent se superposer de façon optimale avec les différentes zones d'une autre couche.

Bien sûr, la même approche peut être appliquée à un quadrillage, et plus généralement à des formes quelconques.

Avantageusement, les différentes couches sont montées sur un tube enrouleur.

De façon préférée, les extrémités libres des couches, (à l'opposé de l'extrémité voisine du tube enrouleur), sont solidaires d'une barre de tirage et une action sur la barre de tirage, tel qu'un basculement et/ou une rotation partielle, permet le décalage d'au moins une couche par rapport à une autre de façon que le dispositif passe d'un état d'occultation à un autre.

De façon avantageuse, les couches se décalant l'une par rapport à l'autre sous l'effet de l'action sur la barre de tirage, sont reliées par un élément de liaison qui suit le déplacement imprimé par la barre de tirage.

Ainsi, lorsque le dispositif est dans l'état d'occultation forte, la liaison souple est préférentiellement parallèle aux couches et celles-ci sont plus proches l'une de l'autre de sorte que l'ensemble du dispositif est relativement tendu est assure une bonne occultation de la surface vitrée.

Avantageusement, le déploiement et/ou le changement d'état du dispositif est motorisé.

L'invention telle que présentée concerne également tout véhicule automobile comprenant un tel dispositif d'occultation.

D'autres caractéristiques et avantages de l'invention apparaîtront plus clairement à la lecture de la description suivante de plusieurs modes de réalisation préférentiels, donnés à titre de simples exemples illustratifs et non limitatifs, et des dessins annexés, parmi lesquels :
- la figure 1 présente un premier mode de réalisation de l'invention illustrant une coupe transversale d'un dispositif d'occultation en position déployée dans un état d'occultation intermédiaire ;
- la figure 2 présente le même dispositif dans un état d'occultation forte, selon le mode de réalisation de la figure 1 ;
- la figure 3 présente la coupe transversale d'un dispositif d'occultation en position déployée, dans un état d'occultation intermédiaire, selon un second mode de réalisation ;
- la figure 4 présente la coupe transversale du même dispositif que celui illustré par la figure 3 dans un état d'occultation forte.

Le principe général de l'invention repose donc sur la mise en oeuvre d'un dispositif d'occultation mobile entre au moins deux positions, une position repliée et une position déployée, destiné à occulter de façon variable une surface vitrée d'un véhicule. Il peut notamment s'agir d'un pavillon intégralement ou en grande partie vitré. L'invention peut également être utilisée pour occulter une vitre arrière ou latérale de véhicule par exemple.

Selon l'invention, le dispositif d'occultation comprend au moins deux couches superposées. Le dispositif comprenant en outre des moyens de décalage d'une des couches par rapport à une autre, il permet, en position déployée, une occultation variable entre deux états extrêmes qui sont un état d'occultation forte et un état d'occultation intermédiaire.

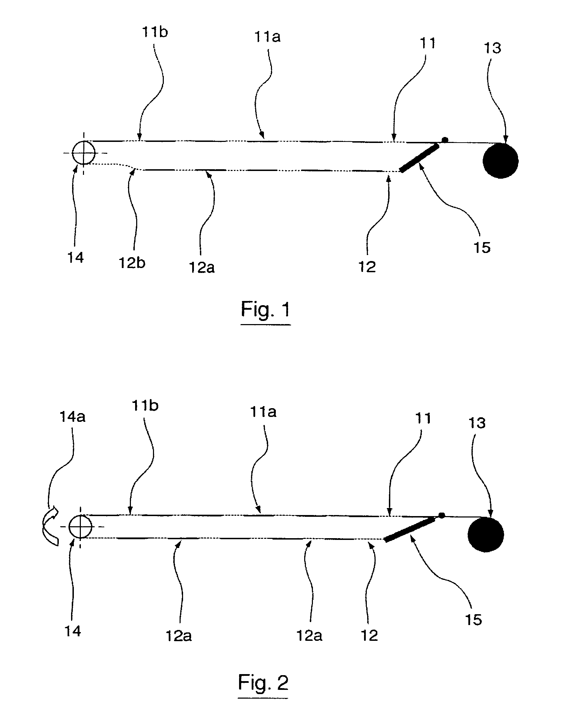

En référence à la figure 1, un premier mode de réalisation d'un dispositif selon l'invention comprend deux éléments d'occultation 11 et 12, ou couches, superposés. L'élément 11 est monté sur un enrouleur 13 et l'élément 12 est solidarisé à l'élément 11 au niveau de l'extrémité reliée à l'enrouleur par un élément de liaison 15, pouvant être réalisée en toile par exemple, et par une barre de tirage 14 à l'extrémité libre.

Chacun des éléments d'occultation présente des zones dont le degré d'opacité est plus faible, respectivement 11b et 12b, ainsi que des zones dont le degré d'opacité est plus élevé, respectivement 11a et 12a. Les zones d'opacités différentes s'étendent perpendiculairement à l'axe de déploiement du dispositif et s'alternent régulièrement.

Selon ce mode de réalisation, les zones dont le degré d'opacité est le plus élevé 11a et 12a sont de même largeur et se superposent deux à deux. Cet état correspond à l'état d'occultation intermédiaire du dispositif. Les zones dont le degré d'opacité est plus faible 11b et 12b sont également en vis à vis et permettent le passage de la lumière.

Le degré d'opacité des zones 11b et 12b dépend du matériau utilisé pour la réalisation des éléments 11 et 12. Typiquement, il s'agira de toile dont l'épaisseur et le tissage plus ou moins serré définiront le degré d'opacité. De façon préférée, la toile sera suffisamment fme pour laisser passer un maximum de lumière.

Selon un mode de réalisation, les zones 11a et 12b plus opaques, ou au moins certaines d'entre elles, sont des baleines. Elles permettent le maintien des éléments d'occultation 11 et 12 dans une forme prédéterminée lorsqu'ils sont déployés.

Typiquement, les baleines 11a et 11b peuvent être réalisées en plastique et/ou être métallisées et sont rapportées sur la toile dans laquelle sont réalisés les éléments 11 et 12. Plus précisément, les baleines peuvent être rapportées en les glissant dans des fourreaux, selon une technique connue de l'art antérieur.

Les baleines 11a et 11b peuvent également être rapportées directement par collage par exemple ou insérée selon une technique décrite dans le document de brevet conjoint déposé par le même demandeur. Selon cette technique, les baleines peuvent être insérées et solidarisées par collage directement entre deux toiles d'épaisseur fme au cours du procédé de fabrication et d'assemblage de celle-ci.

En cas de besoin, ces baleines peuvent être galbées, de façon à s'adapter au galbe de la surface à occulter.

Ces techniques permettent notamment la réalisation d'un élément d'occultation présentant un grand nombre de baleines tout en conservant un faible coût de mise en oeuvre du procédé de fabrication et de montage. Les baleines peuvent ainsi être fines, peu épaisses et peu espacées les unes des autres.

Typiquement, les rideaux de stores fabriqués selon l'invention pourront présenter, pour l'occultation intégrale d'un pavillon de 1,5 m de longueur sur 1 m de largeur, des baleines d'une largeur de 2 à 25 cm et espacées les unes des autres de 2 à 25 cm par exemple.

Le dispositif d'occultation ainsi réalisé permet, dans l'état d'occultation illustré par la figure 1, d'atténuer la luminosité dans l'habitacle, sans l'occulter totalement tout en conservant une luminosité homogène. En effet, un tel dispositif mais présentant des baleines moins nombreuses mais plus larges pourrait donner lieu à des « bandes d'ombre » dans l'habitacle et à une luminosité générale moins homogène et donc agréable et pratique pour les occupants du véhicule.

D'autre part, les baleines nombreuses pouvant être peu larges et peu épaisses, l'encombrement du dispositif en position repliée lors de l'enroulement reste relativement réduit.

Selon un autre mode de réalisation, les zones 11b et 12b dont le degré d'opacité est plus faible peuvent être vide, et donc laisser passer totalement la lumière afin d'obtenir un état d'occultation intermédiaire correspondant à une faible occultation de la lumière en envisageant par exemple que les baleines soient reliées les unes aux autres au niveau de leur extrémités, le long du bord latéral du dispositif d'occultation.

D'une façon générale, dans les différents modes de réalisation décrits, les baleines pourront se prolonger (ou présenter des prolongements adaptés) de façon que leurs extrémités soient guidées et/ou maintenues dans des rails prévus à cet effet.

La figure 2 illustre, selon le même mode de réalisation que la figure 1, un dispositif d'occultation dans l'état d'occultation forte. La barre de tirage a été actionnée, de façon manuelle ou motorisée, et l'élément de liaison 15 a suivi le déplacement imprimé par la barre de tirage. Les éléments 11 et 12 d'occultation se sont ainsi décalés l'un par rapport à l'autre de façon que les zones 11a soit en regard des zones 12b et que les zones 12a soient en regard des zones 11b.

On comprendra qu'il est avantageux que les zones dont le degré d'opacité est plus important 11a et 12a, ainsi que les zones dont le degré d'opacité est plus faible 11b et 12b, présentent toutes sensiblement la même largeur pour obtenir dans l'état d'occultation forte l'occultation maximale.

Plus précisément, il peut être intéressant que les zones dont le degré d'opacité est plus important, 11a et 12a, soient sensiblement plus larges que les zones 11b et 12b pour que l'occultation soit la plus efficace, sans que la lumière ne filtre au niveau des bords latéraux de ces zones.

Il est possible d'envisager une configuration inverse pour l'état d'occultation du dispositif par rapport à la position de la barre de tirage, c'est à dire une configuration selon laquelle l'état d'occultation forte serait obtenu lorsque la barre de tirage n'est pas actionnée.

C'est cependant dans la configuration obtenue selon le mode de réalisation décrit par les figures 1 et 2, que l'état d'occultation forte est le plus efficace. L'ensemble du dispositif est plus « tendu » dans cette configuration et permet ainsi une occultation plus efficace que si l'élément de liaison 15 pouvait osciller légèrement, comme c'est le cas lorsque la barre de tirage 14 n'est pas actionnée. En effet, les mouvements dus au jeu laisseraient alors passer la lumière le long des bords latéraux des zones les plus opaques 11a et 12a.

De plus, lorsque les zones 11a et 12a sont des baleines rigides, elles permettent le maintien des éléments 11 et 12 et permettent notamment que dans cet état d'occultation forte, ceux-ci soient moins souples et qu'ils soient maintenus dans cette position décalée de façon efficace, indépendamment des mouvements du véhicule.

Cette configuration est également avantageuse du point de vue de l'encombrement du dispositif en position repliée. En effet, l'enroulement du dispositif dans l'état d'occultation forte, selon lequel les baleines 11a et 12a sont décalées les unes par rapport aux autres, permet d'obtenir un encombrement plus réduit du dispositif (les baleines 12a s'intercalant avec les baleines 11a) et se fera de façon plus efficace, le jeu dans la position relative des éléments 11 et 12 étant faible.

Selon ce mode de réalisation, la barre a été actionnée par rotation comme indiqué par la flèche 14a jusqu'à atteindre une butée correspondant à l'état d'occultation forte. Il sera cependant possible de prévoir un autre système d'actionnement de la barre, tel qu'un basculement par exemple, pour permettre le décalage des éléments d'occultation 11 et 12.

Par ailleurs, il est possible d'envisager un dispositif présentant des crans intermédiaires d'actionnement de la barre de tirage entre les deux positions illustrées par les figures 1 et 2. Ainsi, il sera possible aux occupants du véhicule de moduler encore plus précisément le degré d'occultation en fonction de la luminosité souhaitée en permettant un recouvrement partiel des zones les moins opaques 11b et 12b, par les zones les plus opaques, 11a et 12a.

D'autres variantes peuvent également être envisagées, notamment en remplaçant les baleines par des bandes de tissu plus foncées ou plus opaque.

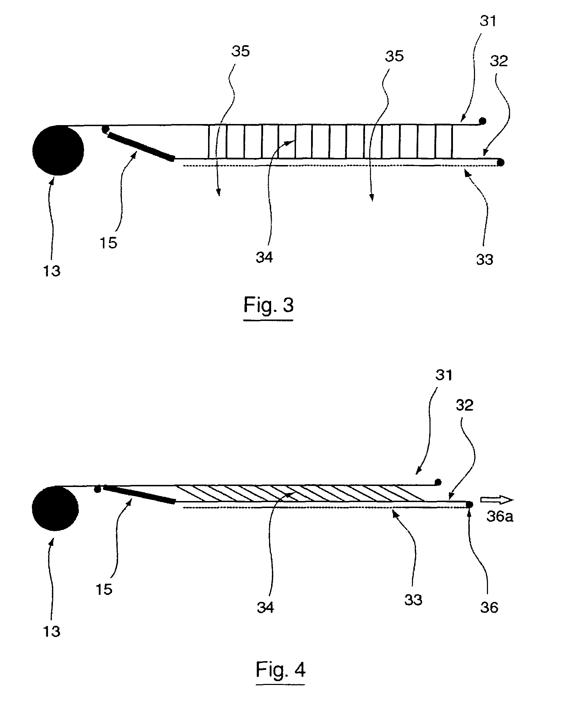

Un second mode réalisation du dispositif est illustré par la figure 3 en position déployée. Ce mode de réalisation comprend deux couches superposées 31 et 32, ainsi qu'une troisième couche 33 qui pourra être une couche assortie au garnissage intérieur du véhicule et qui peut être solidarisée à la couche 32.

Typiquement, cette couche 33 peut-être réalisée dans un matériau tissé gratté tel que du Jersey (marque déposée).

Selon ce mode de réalisation, les couches 31 et 32 sont reliées l'une à l'autre par des lames d'occultation 34, réparties de façon régulière sur toute la longueur des couches 31. Ces lames d'occultation 34 s'étendent perpendiculairement à l'axe de déploiement du dispositif, le déploiement se faisant au moyen d'un enrouleur 13 sur laquelle est montée la couche 31. La couche 32 est également reliée à la couche 31 par un élément de liaison 15, au voisinage de l'enrouleur 13.

Dans une version simplifiée, les couches 31 et 32 peuvent être limitées à des éléments latéraux, circulant par exemple dans des rails. Les lames sont solidarisées par leurs extrémités à ces éléments latéraux.

Les couches 31 et 32 peuvent être réalisées, par exemple, en toile synthétique, et plus généralement, l'ensemble formé par les couches 31, 32 et par les lames d'occultation 34, pourra être réalisé en toile synthétique à trois dimensions et pourra être fabriqué par extrusion. Ainsi, le coût de fabrication et de montage d'un tel dispositif sera réduit.

Dans la position illustrée par la figure 3, les lames d'occultation 34 sont compris dans des plans essentiellement verticaux, le dispositif est alors dans l'état d'occultation intermédiaire. Les flèches 35 indiquent le passage de la lumière dans l'habitacle du véhicule, bien que la luminosité soit atténuée par rapport à la luminosité présente dans le véhicule lorsque le dispositif d'occultation est totalement (ou partiellement) replié.

La figure 4 illustre, selon le même mode de réalisation que la figure 3, le dispositif dans l'état d'occultation forte. La barre de tirage 36 a été actionnée (selon le même principe que précédemment par exemple), de façon manuelle ou motorisée, provoquant ainsi le décalage de la couche 32 par rapport à la couche 31 selon une direction indiquée par la flèche 36a, ainsi que l'inclinaison des lames d'occultation 34 et de l'élément de liaison 15.

Ainsi, comme décrit par la figure 4, le dispositif d'occultation est dans un état permettant une occultation plus forte de la lumière que dans l'état illustré par la figure 3, mais sans être maximale. En effet, les rayons lumineux orientés selon la même inclinaison que les lames d'occultation 34 pourront passer, bien que de façon atténuée, dans l'habitacle.

Lorsqu'une occultation maximale est souhaitée, la barre de tirage est basculée au maximum, et les lames d'occultation 34 et l'élément de liaison 15 sont alors sensiblement parallèles aux couches 31 et 32, et celles-ci sont très proches l'une de l'autre. Dans cet état, les rayons lumineux ne passent alors quasiment pas et on comprend que, lorsque la largeur lames d'occultation 34 sera supérieure à la distance les séparant deux à deux, l'occultation sera optimale, la lumière ne pouvant alors pas passer le long de leurs bords latéraux.

Un tel dispositif permet ainsi différents degrés d'occultation de la surface vitrée à occulter en fonction de la position de la barre de tirage pour laquelle on pourra prévoir différents crans d'arrêt intermédiaires.

D'autre part, dans les différents modes de réalisation envisagés, il sera bien sûr possible de prévoir des états de déploiement partiel du dispositif entre les deux positions extrêmes, une position totalement repliée et une position totalement déployée.

De plus, plusieurs stores peuvent être prévus, pour occulter sélectivement des parties de la surface vitrée (gauche, droite, avant, arrière).

Selon ce second mode de réalisation, l'enroulement du dispositif peut se faire de façon préférée lorsque le dispositif est dans l'état d'occultation forte, ainsi, l'ensemble dispositif étant tendu, les différents éléments ne risquent pas de se froisser pendant le séjour en position enroulée lorsque ceux-ci sont réalisés, par exemple, en toile synthétique (cela permet notamment de limiter l'encombrement du dispositif en position repliée).

Ce mode de réalisation permet ainsi la réalisation d'un dispositif léger, présentant un encombrement réduit en position repliée et peu coûteux à fabriquer et à monter.

Selon les différents modes de réalisation de l'invention, une couche assortie au véhicule, réalisée par exemple en Jersey (marque déposée) pourra être prévue, ainsi que d'autres couches supplémentaires éventuelles.

## Revendications

1. Dispositif d'occultation pour une surface vitrée d'un véhicule automobile, pouvant prendre au moins deux positions, une position repliée et une position déployée,
comprenant au moins deux couches (11, 12) superposées sur au moins une partie de leur surface respective, dans ladite position déployée,
et comprenant des moyens de décalage de la position d'une première desdites couches par rapport à au moins une deuxième desdites couches, **caractérisé en ce que** par l'action des moyens de décalage ledit dispositif puisse prendre au moins un état d'occultation forte et au moins un état d'occultation intermédiaire de ladite surface vitrée.

2. Dispositif d'occultation selon la revendication 1, **caractérisé en ce qu**'au moins deux desdites couches superposées sont reliées par au moins une lame (34) d'occultation de largeur uniforme prédéterminée, s'étendant perpendiculairement par rapport à l'axe de déploiement dudit dispositif d'occultation.

3. Dispositif d'occultation selon la revendication 2, **caractérisé en ce qu**'au moins deux couches superposées et lesdites lames forment un ensemble réalisé en toile synthétique à trois dimensions.

4. Dispositif d'occultation selon la revendication 3, **caractérisé en ce que** ledit ensemble est réalisé par extrusion.

5. Dispositif d'occultation selon l'une quelconque des revendications 2 à 4, **caractérisé en ce que** dans l'état d'occultation intermédiaire, lesdites lames d'occultation sont comprises dans des plans sensiblement perpendiculaires auxdites couches et, dans l'état d'occultation forte, lesdites lames d'occultation sont comprises dans un même plan sensiblement parallèle auxdites couches.

6. Dispositif d'occultation selon l'une quelconque des revendications 2 à 5, **caractérisé en ce que** lesdites lames d'occultation sont espacées les unes des autres d'une distance inférieure ou égale à ladite largeur uniforme prédéterminée, de façon que dans ledit état d'occultation forte, lesdites lames d'occultation soient voisines ou se recouvrent au moins légèrement.

7. Dispositif d'occultation selon la revendication 1, **caractérisé en ce qu**'au moins deux desdites couches présentent chacune au moins deux zones d'opacités différentes.

8. Dispositif d'occultation selon la revendication 7, **caractérisé en ce que** pour chacune desdites couches, lesdites zones comprennent des premières zones présentant un premier degré d'opacité et des secondes zones d'un second degré d'opacité, supérieur audit premier degré d'opacité, et **en ce que** lesdites premières et secondes zones s'alternent régulièrement.

9. Dispositif d'occultation selon l'une quelconque des revendications 7 et 8, **caractérisé en ce qu**'au moins une desdites zones de second degré d'opacité d'une couche est conçue pour pouvoir se superposer avec au moins une desdites zones de premier degré d'opacité d'une autre couche, dans ledit état d'occultation forte.

10. Dispositif d'occultation selon l'une quelconque des revendications 7 et 8, **caractérisé en ce qu**'au moins une desdites zones de premier degré d'opacité d'une couche est conçue pour pouvoir se superposer avec au moins une desdites zones de premier degré d'opacité d'une autre couche, dans ledit état d'occultation intermédiaire.

11. Dispositif d'occultation selon l'une quelconque des revendications 7 et 8, **caractérisé en ce que** chacune desdites zones s'étend perpendiculairement à l'axe de déploiement desdites couches.

12. Dispositif d'occultation selon l'une quelconque des revendications 8 à 11, **caractérisé en ce que** lesdites secondes zones sont formées par des baleines.

13. Dispositif d'occultation selon l'une quelconque des revendications 8 à 12, **caractérisé en ce que** lesdites premières et secondes zones d'au moins deux desdites couches sont sensiblement de la même largeur.

14. Dispositif d'occultation selon l'une quelconque des revendications 1 à 13, **caractérisé en ce que** lesdites couches sont montées sur un même tube enrouleur (13).

15. Dispositif d'occultation selon l'une quelconque des revendications 1 à 14, **caractérisé en ce que** l'extrémité libre desdites couches sont solidaires d'une même barre de tirage (14).

16. Dispositif d'occultation selon la revendication 15, **caractérisé en ce qu**'un changement d'état d'occultation est obtenu en agissant sur ladite barre de tirage.

17. Dispositif d'occultation selon la revendication 16, **caractérisé en ce qu'**un basculement et/ou rotation partiels de ladite barre de tirage permet le décalage d'au moins une couche par rapport à une autre.

18. Dispositif d'occultation selon l'une quelconque des revendications 15 à 17, **caractérisé en ce qu**'au voisinage de l'autre extrémité, lesdites couches sont reliées par au moins un élément de liaison, qui suit le déplacement imprimé par ladite barre de tirage.

19. Dispositif d'occultation selon la revendication 1, **caractérisé en ce que** le déploiement desdites couche et/ou le changement d'état dudit dispositif est motorisé.

20. Dispositif d'occultation selon l'une quelconque des revendication 1 à 19, **caractérisé en ce qu**'il est utilisé pour l'occultation d'un pavillon vitré ou d'une partie d'un pavillon vitré.

21. Véhicule automobile comprenant au moins un dispositif d'occultation pouvant prendre au moins deux positions, une position repliée et une position déployée, comprenant au moins deux couches superposées sur au moins une partie de leur surface respective, dans ladite position déployée, et comprenant des moyens de décalage de la position d'une première desdites couches par rapport à au moins une deuxième desdites couches, **caractérisé en ce que** par l'action des moyens de décalage ledit dispositif puisse prendre au moins un état d'occultation forte et au moins un état d'occultation intermédiaire de ladite surface vitrée.

## Claims

1. Occultation device for a motor vehicle glazed surface, capable of having at least two positions: a retracted position and a deployed position, comprising at least two layers (11,12) superimposed on at least part of their respective surfaces, in the said deployed position and comprising means of offsetting the position of a first one of the said layers with respect to at least a second one of the said layers, which, through the action of the offsetting means, the said device can have at least one state of intense occultation and at least one state of intermediate occultation of the said glazed surface.

2. Occultation device according to claim 1, **characterized in that** at least two of the said superimposed layers are connected by at least one occultation slat (34) of a predetermined uniform width, running perpendicularly with respect to the axis of deployment of the said occultation device.

3. Occultation device according to claim 2, **characterized in that** at least two superimposed layers and the said slats form a three-dimensional assembly made of synthetic cloth.

4. Occultation device according to claim 3, **characterized in that** the said assembly is made by extrusion.

5. Occultation device according to any of claims 2 to 4, **characterized in that**, in the intermediate occultation state, the said occultation slats are included in planes which are substantially perpendicular to the said layers and, in the intense occultation state, the said occultation slats are included in a single plane which is substantially parallel with the said layers.

6. Occultation device according to any of claims 2 to 5, **characterized in that** the said occultation slats are spaced from one another by a distance smaller than or equal to the said predetermined uniform width, so that, in the said intense occultation state, the said occultation slats are adjacent or overlap at least slightly.

7. Occultation device according to claim 1, **characterized in that** at least two of the said layers each have at least two different opacity areas.

8. Occultation device according to claim 7, **characterized in that**, for each of the said layers, the said areas comprise first areas having a first degree of opacity and second areas having a second degree of opacity, greater than the said first degree of opacity and **in that** the said first and second areas alternate evenly.

9. Occultation device according to either of claims 7 or 8, **characterized in that** at least one of the said areas with the second degree of opacity of a layer is designed so that it can be superimposed with at least one of the said areas with the first degree of opacity of another layer, in the said intense occultation state.

10. Occultation device according to either of claims 7 or 8, **characterized in that** at least one of the said areas with the first degree of opacity of a layer is designed so that it can be superimposed with at least one of the said areas with the first degree of opacity of another layer, in the said intermediate occultation state.

11. Occultation device according to either of claims 7 or 8, **characterized in that** each of the said areas runs perpendicularly to the axis of deployment of the said layers.

12. Occultation device according to any of claims 8 to 11, **characterized in that** the said second areas are formed by rods.

13. Occultation device according to any of claims 8 to 12, **characterized in that** the said first and second areas of at least two of the said layers are substantially of the same width.

14. Occultation device according to any of claims 1 to 13, **characterized in that** the said layers are fitted to one single winding tube (13).

15. Occultation device according to any of claims 1 to 14, **characterized in that** the free ends of the said layers are rigidly fastened to one single pulling bar (14).

16. Occultation device according to claim 15, **characterized in that** a change of occultation state is obtained by acting on the said pulling bar.

17. Occultation device according to claim 16, **characterized in that**, with partial tilting and/or rotation of the said pulling bar, at least one layer can be offset with respect to another.

18. Occultation device according to any of claims 15 to 17, **characterized in that**, in the vicinity of the other end, the said layers are connected by at least one connecting element which follows the displacement imparted by the said pulling bar.

19. Occultation device according to claim 1, **characterized in that** the deployment of the said layers and/or the change of state of the said device is motorized.

20. Occultation device according to any of claims 1 to 19, **characterized in that** it is used for occulting a glazed roof or part of a glazed roof.

21. Motor vehicle comprising at least one occultation device, capable of having at least two positions: a retracted position and a deployed position, comprising at least two layers superimposed on at least part of their respective surfaces, in the said deployed position and comprising means of offsetting the position of a first one of the said layers with respect to at least a second one of the said layers, which, through the action of the offsetting means, the said device can have at least one state of intense occultation and at least one state of intermediate occultation of the said glazed surface.

## Patentansprüche

1. Verdunkelungsvorrichtung einer Glasscheibe eines Kraftfahrzeuges, die mindestens zwei Positionen, eine zusammengefaltete und eine entfaltete Position, einnehmen kann, die mindestens zwei Lagen (11, 12), welche in der entfalteten Position mindestens über einen Teil ihrer jeweiligen Fläche übereinander liegen, sowie Mittel zum Verschieben der Position einer ersten der besagten Lagen gegenüber von mindestens einer zweiten der besagten Lagen aufweist,
**dadurch gekennzeichnet, dass** unter der Einwirkung der Mittel zum Verschieben die besagte Vorrichtung mindestens einen Zustand starker Verdunkelung und mindestens einen Zustand mittlerer Verdunkelung der besagten Glasscheibe einnehmen kann.

2. Verdunkelungsvorrichtung nach Anspruch 1, **dadurch gekennzeichnet, dass** mindestens zwei der besagten übereinanderliegenden Lagen durch mindestens einen Verdunkelungsblatt (34) vorgegebener gleichmäßiger Breite verbunden sind, das sich senkrecht im Verhältnis zur Entfaltungsachse der besagten Verdunkelungsvorrichtung erstreckt.

3. Verdunkelungsvorrichtung nach Anspruch 2, **dadurch gekennzeichnet, dass** mindestens zwei übereinanderliegende Lagen sowie die besagten Blätter eine dreidimensionale, aus synthetischem Stoff gefertigte Gruppe bilden.

4. Verdunkelungsvorrichtung nach Anspruch 3, **dadurch gekennzeichnet, dass** die besagte Gruppe durch Extrusion gebildet wird.

5. Verdunkelungsvorrichtung nach einem der Ansprüche 2 bis 4, **dadurch gekennzeichnet, dass** im Zustand mittlerer Verdunkelung die besagten Verdunkelungsblätter in Ebenen liegen, die in etwa senkrecht zu den besagten Lagen verlaufen und im Zustand starker Verdunkelung die besagten Verdunkelungsblätter in einer selben Ebene liegen, die in etwa parallel zu den besagten Lagen verläuft.

6. Verdunkelungsvorrichtung nach einem der Ansprüche 2 bis 5, **dadurch gekennzeichnet, dass** der Abstand zwischen den besagten Verdunkelungsblättern weniger oder gleich der vorgegebenen gleichmäßigen Breite ist, so dass im besagten Zustand starker Verdunkelung die besagten Verdunkelungsblätter nebeneinander liegen oder zumindest zum kleinen Teil übereinander liegen.

7. Verdunkelungsvorrichtung nach Anspruch 1, **dadurch gekennzeichnet, dass** mindestens zwei der besagten Lagen jeweils mindestens zwei Bereiche verschiedener Lichtundurchlässigkeit aufweisen.

8. Verdunkelungsvorrichtung nach Anspruch 7, **dadurch gekennzeichnet, dass** für jede der besagten Lagen die erwähnten Bereiche erste Bereiche mit einem ersten Grad von Lichtundurchlässigkeit sowie zweite Bereiche mit einem zweiten Grad von Lichtundurchlässigkeit umfassen, wobei dieser zweite Grad der Lichtundurchlässigkeit stärker als der erste ist und dadurch, dass die besagten ersten und zweiten Bereiche gleichmäßig abwechselnd angebracht sind.

9. Verdunkelungsvorrichtung nach einem der Ansprüche 7 oder 8, **dadurch gekennzeichnet, dass** mindestens einer der besagten Bereiche von Lichtundurchlässigkeit zweiten Grades einer Lage so ausgelegt ist, dass er (sie), im besagten Zustand starker Verdunkelung, sich über mindestens einen der besagten Bereiche von Lichtundurchlässigkeit ersten Grades einer anderen Lage legen lässt (lassen).

10. Verdunkelungsvorrichtung nach einem der Ansprüche 7 oder 8, **dadurch gekennzeichnet, dass** mindestens einer der Bereiche von Lichtundurchlässigkeit ersten Grades so ausgelegt ist, dass er (sie), im besagten Zustand mittlerer Verdunkelung, sich über mindestens einem der besagten Bereiche von Lichtundurchlässigkeit ersten Grades einer anderen Lage legen lässt (lassen).

11. Verdunkelungsvorrichtung nach einem der Ansprüche 7 oder 8, **dadurch gekennzeichnet, dass** sich jeder der besagten Bereiche senkrecht zur Entfaltungsachse der besagten Lagen erstreckt.

12. Verdunkelungsvorrichtung nach einem der Ansprüche 8 bis 11, **dadurch gekennzeichnet, dass** die besagten zweiten Bereiche durch Stäbchen gebildet sind.

13. Verdunkelungsvorrichtung nach einem der Ansprüche 8 bis 12, **dadurch gekennzeichnet, dass** die besagten mindestens ersten und zweiten Bereiche von mindestens zwei der besagten Lagen in etwa dieselbe Breite aufweisen.

14. Verdunkelungsvorrichtung nach einem der Ansprüche 1 bis 13, **dadurch gekennzeichnet, dass** die besagten Lagen auf derselben Aufrollwalze (13) aufgebracht sind.

15. Verdunkelungsvorrichtung nach einem der Ansprüche 1 bis 14, **dadurch gekennzeichnet, dass** das freie Ende einer jeden der besagten Lagen jeweils an derselben Zugstange (14) befestigt ist.

16. Verdunkelungsvorrichtung nach Anspruch 15, **dadurch gekennzeichnet, dass** eine Änderung des Verdunkelungszustandes durch Einwirken auf die besagte Zugstange erreicht wird.

17. Verdunkelungsvorrichtung nach Anspruch 16, **dadurch gekennzeichnet, dass** ein teilweises Kippen und/oder Drehen der besagten Zugstange das Verschieben von mindestens einer Lage gegenüber einer anderen Lage ermöglicht.

18. Verdunkelungsvorrichtung nach einem der Ansprüche 15 bis 17, **dadurch gekennzeichnet, dass** in der Nähe des anderen Endes die besagten Lagen mit Hilfe von mindestens einem Verbindungselement verbunden sind, das (die) der von der besagten Zugstange bewirkten Bewegung folgt (folgen).

19. Verdunkelungsvorrichtung nach Anspruch 1, **dadurch gekennzeichnet, dass** die Entfaltung der besagten Lagen und/oder die Zustandsänderung der besagten Vorrichtung motorisiert ist.

20. Verdunkelungsvorrichtung nach einem der Ansprüche 1 bis 19, **dadurch gekennzeichnet, dass** sie zum Verdunkeln eines verglasten Fahrzeugdaches oder eines Teiles eines verglasten Fahrzeugdaches verwendet wird.

21. Kraftfahrzeug, welches mindestens eine Verdunkelungsvorrichtung aufweist, die mindestens zwei Positionen, eine zusammengefaltete und eine entfaltete Position einnehmen kann, wobei die Vorrichtung mindestens zwei Lagen, die in der entfalteten Position über mindestens einen Teil ihrer jeweiligen Fläche übereinander liegen sowie Mittel zum Verschieben der Position einer ersten der besagten Lagen gegenüber mindestens einer zweiten der besagten Lagen aufweist,
**dadurch gekennzeichnet, dass** durch das Einwirken der Mittel zum Verschieben die besagte Vorrichtung mindestens einen starken Verdunkelungszustand und mindestens einen mittleren Verdunkelungszustand der besagten Glasscheibe einnehmen kann.
